# EUROPEAN PATENT APPLICATION

(11) **EP 1 939 063 A1**
(43) Date of publication of application: **02.07.2008**
(21) Application number: 06811800.9
(22) Date of filing: 16.10.2006
(51) Int. Cl.: B62D 1/06, B62D 1/08, B68F 1/00

(54) **LEATHERED STEERING WHEEL**

(30) Priority: 17.10.2005 JP 2005301985
(71) Applicant: Midori Anzen Co., Ltd., Tokyo 150-8455 (JP)
(72) Inventor: ARIMA, Takashi c/o MIDORI ANZEN CO., LTD., Tokyo 150-0012 (JP); KOBAYASHI, Seiichi c/o MIDORI ANZEN CO., LTD., Tokyo 150-0012 (JP); SUZUKI, Tomoyuki c/o MIDORI ANZEN CO., LTD., Tokyo 150-0012 (JP)
(74) Representative: Grünecker, Kinkeldey, Stockmair & Schwanhäusser Anwaltssozietät
(86) International application number: PCT/JP2006/320529
(87) International publication number: WO 2007/046312

(57) **Abstract**

A steering wheel according to the present invention includes a body 3 pre-produced integrally, a driver-side leather 15 for covering a driver-side of the body 3 and a anti-driver-side leather 17 for covering a anti-driver-side of the body 3. Edges of the leathers are treated by kimekomi along a seam line between the driver-side leather 15 and the anti-driver-side leather 17 at an outer ring circumference of the body 3. Edges of the leathers are treated by hand-sewing along a seam line between the driver-side leather 15 and the anti-driver-side leather 17 at an inner ring circumference of the body 3. Therefore, according to the steering wheel of the present invention, production thereof can become more ease, less production man-hours can be achieved than ever before and a high-quality feeling can be provided by preventing grains and dimples on the leather to be eliminated.

## Description

### TECHNICAL FIELD

The present invention relates to a steering wheel, especially, a steering wheel on which leather is wrapped.

### BACKGROUND ART

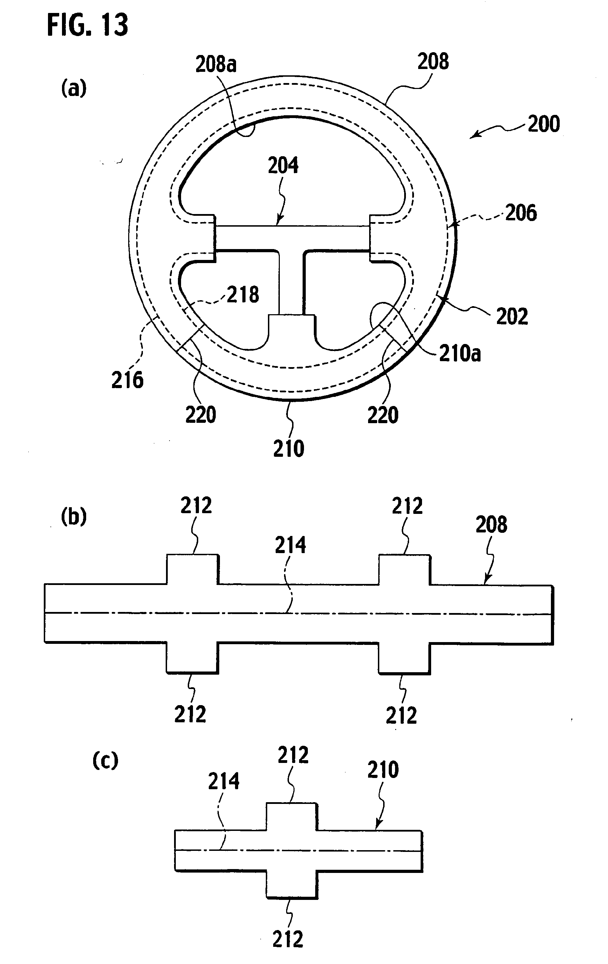

Fig. 13(a) is a schematic configuration view of a conventional steering wheel 200. Figs. 13(b) and 13(c) are developed views showing shapes of leathers used for the steering wheel 200.

The conventional steering wheel 200 is configured by wrapping leathers 208 and 210 on a body 206 including a ring-shaped ring (rim) 202 and spokes 204.

The leather 208 has a sheeted rectangular shape and tabs 212 extended from both side edges for wrapping some portions of the spokes 204. The leather 210 is formed similarly. A central line 214 along the longitudinal direction of the leathers 208 and 210 has a length almost equal to the length of the outer circumference 216 of the ring 202 (the most outer circumferential length of the ring 202).

Therefore, as shown in Fig. 13, the leathers 208 and 210 is adequately expanded or shrunk excluding their portions corresponding to the outer circumference 216 of the ring 202 when the leathers 208 and 210 are attached onto the rounded surface of the body 206 with matching the outer circumference 216 of the ring 202 and the central line 214 of the leathers 208 and 210.

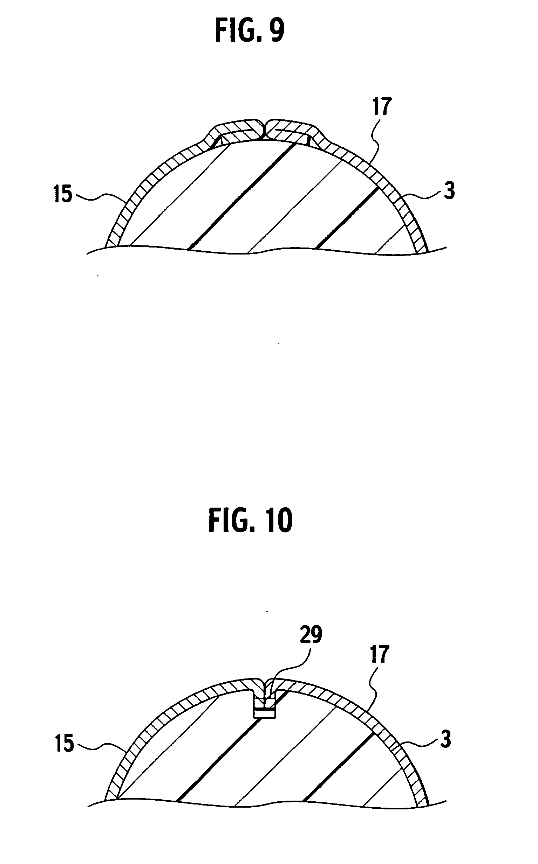

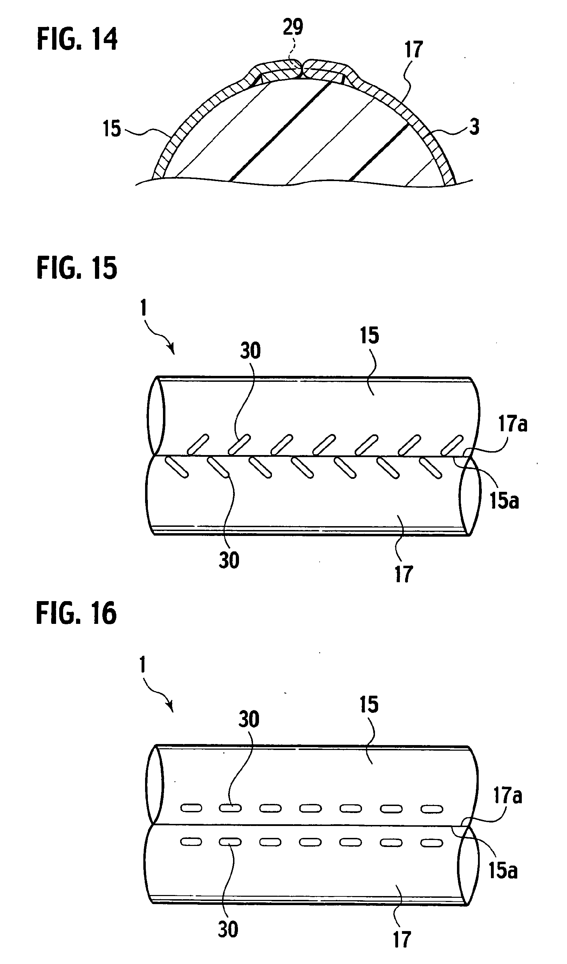

Side edges 208a of the leather 208 along an inner circumference of the ring 202 are attached each other, for example, by suturing such as sewing-and-folding (see Fig. 14) or by grooving (see Fig. 10) when the leathers 208 and 210 are attached onto the body 206. Side edges 210a of the leather 210 are also attached each other similarly. The leathers 208 and 210 are attached along seam lines 220, for example, by folding-and-gluing (see Fig. 9).

The body 206 of with the above steering wheel 200 is covered by the two leathers, however it may be covered by a single leather or three or more leathers. In addition, there must be one seam line 220 due to limitations of production even if the steering wheel 200 is covered by a single leather.

Since a shrunk amount of the leathers 208 and 210 increases nearer to the inner circumference 218, there should be corrugations in the conventional steering wheel 200. These corrugations are alleviated by adjusting tension of strings or erased by hot steam finishing process after sewing process. (Since finishing process by sewing edges of steering wheel leather(s) is consuetudinarily called "hand-sewing" which is intended to include mechanically sewing, the term "hand-sewing" will be used hereinafter.) Since the leather(s) is expanded forcibly in the above processes, "grains" and "dimples" provided essentially on a leather surface are eliminated. As a result, a high-quality feeling of the steering wheel may be degraded.

Therefore, as steering wheels shown in Patent Documents 1 and 2, a method where a ring-shaped leather is attached onto a body is known.

In the steering wheel of the Patent Document 1, as shown in Fig. 1(a) of the Patent Document 1, a body is covered by a pair of ring-shaped leathers (leather materials). In addition, in the steering wheel of the Patent Document 2, as shown in Figs. 1 and 2 of the Patent Document 2, a body is covered by a ring-shaped leather.

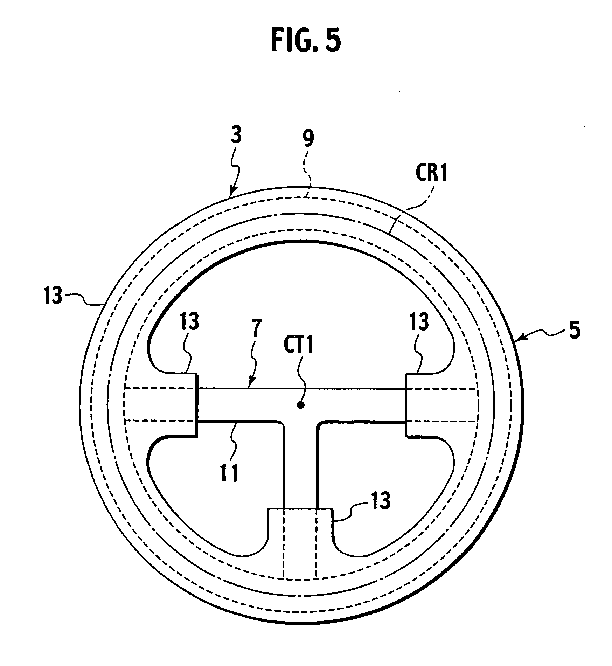

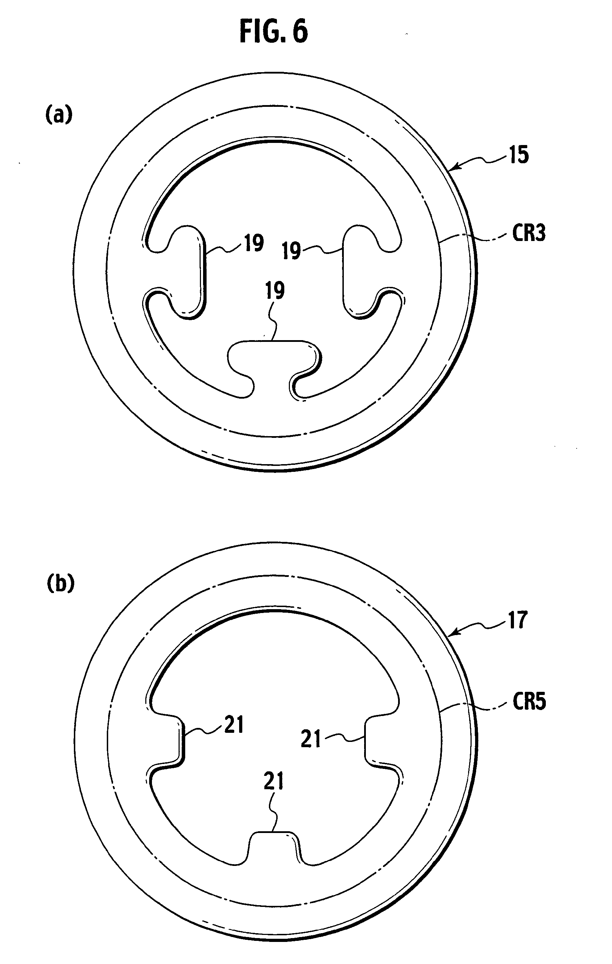

In respect to a leather size before covering the body of the steering wheel in Patent Document 1, a length of a circle CR3 (circle existing in a width center of the ring-shaped leather) shown in Fig. 6 (a) or a circle CR5 (circle existing in a width center of the ring-shaped leather) shown in Fig. 6(b), is almost equal to a length of a circle CR1 (circle existing along a driver-side ridge of the ring of the body) shown in Fig. 5.

While the leather(s) is expanded or shrunk on the inner side of the body at the leather (s) attaching onto the body in the conventional steering body 200, the leather(s) is expanded or shrunk on both inner and outer side of the body in the steering wheel of the Patent Document 1 or 2. Therefore, an expanded or shrink amount of the leather (s) at attached onto the body is more smaller in the steering wheel of the Patent Document 1 than that in the conventional steering wheel 200. As a result, there is less corrugations at the leather(s) attached onto the body and it is prevented that "grains" and "dimples" provided essentially on a leather surface are lost.

Note that, in the conventional steering wheel 200, a length A of the leathers (a total length of the central line 214 in Fig. 13(b) and the central line 214 in Fig. 13(c)) is made equal to a length B of the outer circumference 216 of the body 206. If the length A of the leathers was made longer than the length B, corrugations is generated on the leathers 208 and 210 at attaching the leathers 208 and 210 onto the body 206. On the contrary, if the length A of the leathers was made shorter than the length B, the leathers 208 and 210 must be expanded much at attaching the leathers 208 and 210 onto the body 206. As described above, loosing "grains" and "dimples" provided essentially on a leather surface must be tolerated to some extent at producing the conventional steering wheel without corrugations.
[Patent Document 1] Japanese granted patent publication No. 7-102815
[Patent Document 2] Japanese patent application publication No. 10-230856

### DISCLOSURE OF THE INVENTION

Since a pair of divided bodies (onto each of which a leather is attached) is attached integrally onto a core member by gluing and so on to configure a steering wheel as shown in Figs. 1(e) and 1(f) in the Patent Document 1, it is problematic that more production man-hours are needed.

In addition, a visible surface (driver's side surface of the ring) of the steering wheel in the Patent Document 2 is covered by a leather(s). However, as shown in Fig. 1 in the Patent Document 2, since edges of the leather are finished by tucking (see a portion VIII in Fig. 4), it is hard to produce the steering wheel. In other words, it is hard to finish the edges by kimekomi when the leathers are attached onto the body without corrugations under being expanded or shrunk accordingly at both inner and outer circumference. Note that this method of finishing edges is called "kimekomi" in Japanese. The "kimekomi" is a Japanese traditional technique and it is a method of finishing edges where leather edges are tucked into a groove to be fixed. Gluing may be applied or may not be applied. The term "kimekomi" is used hereinafter.

Furthermore, since only a visible surface is covered by a leather(s), the steering wheel in the Patent Document 2 lacks a high-quality feeling. It makes more hard to produce that the steering wheel that a leather (s) is attached also onto a back surface of the ring to produce a high quality feeling and its (their) edges are finished by the kimekomi.

The present invention is achieved in view of the above-mentioned problems, an object of the present invention is to provide a steering wheel capable of being produced more easily than the conventional one to reduce production man-hours and producing a high quality feeling by preventing elimination of grains and dimples on leathers.

A steering wheel according to the present invention includes a body pre-produced integrally with a ring and spokes; a driver-side leather for covering a driver-side of the body; and an anti-driver-side leather for covering a anti-driver-side of the body. Edges of the driver-side leather and the anti-driver-side leather are treated by at least one of (a) tucking [kimekomi], (b) folding-and-gluing, (c) welting and (d) grooving, along a seam line between the edges at an outer circumference of the ring. Edges of the driver-side leather and the anti-driver-side leather are treated by at least one of (e) sewing [hand-sewing], (f) folding-and-gluing and (g) welting, along a seam line between the edges at an inner circumference of the ring.

[Fig. 1] Fig. 1 shows a drawing of an overview of
a steering wheel of one embodiment according to the present invention.
[Fig. 2] Fig. 2 shows a drawing viewed from an arrow II in Fig. 1.
[Fig. 3] Fig. 3 shows a drawing viewed from an arrow III in Fig. 1.
[Fig. 4] Fig. 4 shows a cross-sectional drawing along lines IV in Fig. 2
[Fig. 5] Fig. 5 shows a drawing of an overview of a body.
[Fig. 6] Fig. 6 shows drawings of overviews of leathers covering the body.
[Fig. 7] Fig. 7 shows an explanatory drawing of leather edges finished by hand-sewing.
[Fig. 8] Fig. 8 shows an explanatory drawing of leather edges finished by welting, which is another example of a portion VIII in Fig. 4.
[Fig. 9] Fig. 9 shows an explanatory drawing of leather edges finished by folding-and-gluing, which is still another example of a portion VIII in Fig. 4.
[Fig. 10] Fig .10 shows an explanatory drawing of leather edges finished by grooving, which is yet another example of a portion VIII in Fig. 4.
[Fig. 11] Fig. 11 shows an exploratory drawing of grooving.
[Fig. 12] Fig. 12 shows another example of leather segmentation.
[Fig. 13] Fig. 13 shows a conventional steering wheel.
[Fig. 14] Fig. 14 shows an explanatory drawing of sewing-and-folding.
[Fig. 15] Fig. 15 shows an explanatory drawing of V-stitch, which corresponds to a portion of a steering wheel viewed from inner circumferential side.
[Fig. 16] Fig. 16 shows an explanatory drawing of parallel-stitch, which corresponds to a portion of a steering wheel viewed from inner circumferential side.

### BEST MODE FOR CARRYING OUT THE INVENTION

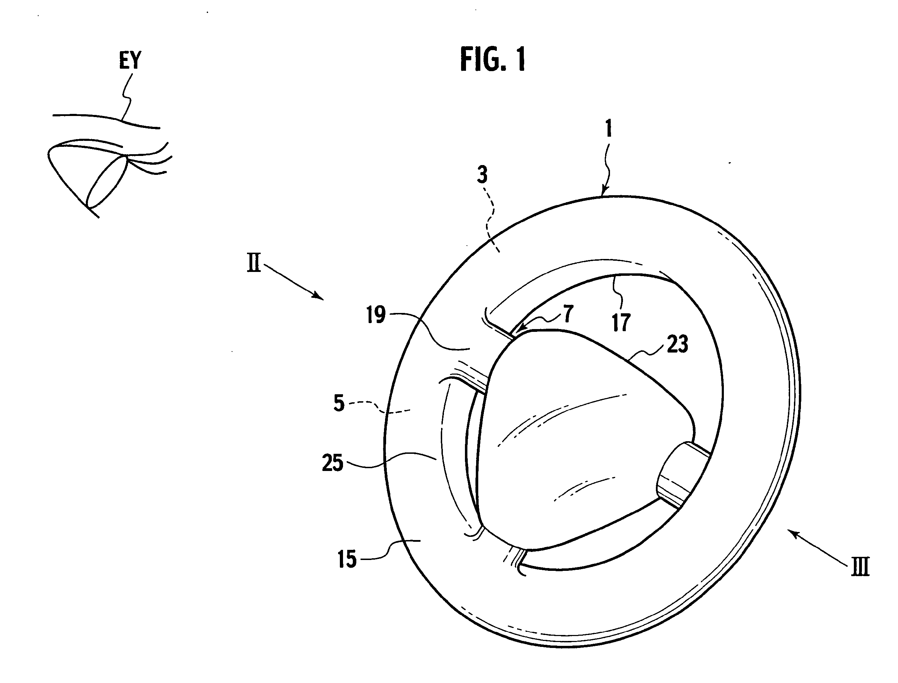

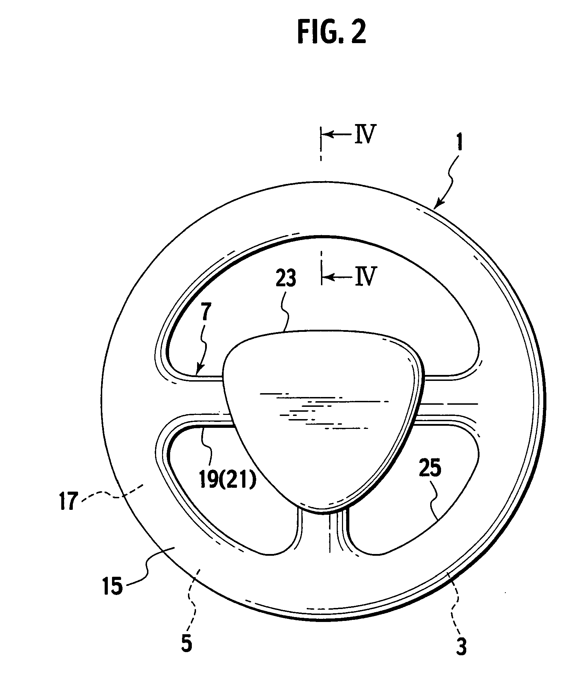

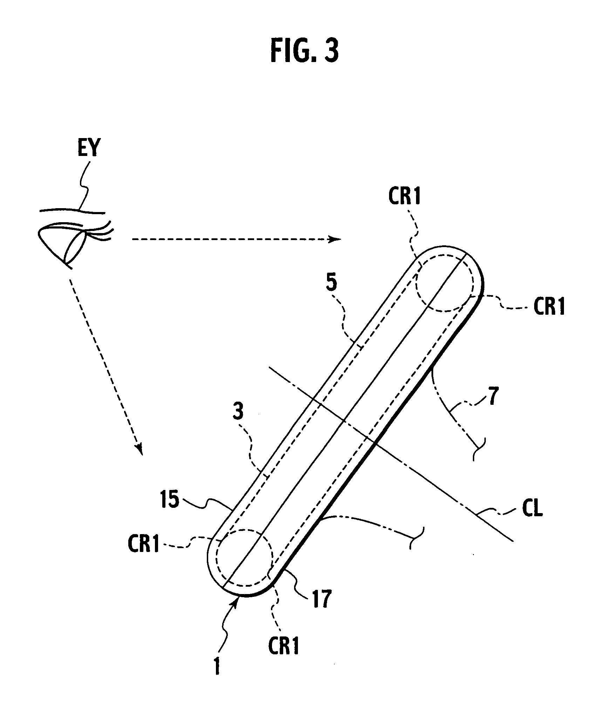

A steering wheel 1 according to an embodiment of the present invention is used with being provided with a vehicle such as an automobile. The steering wheel 1 includes, as shown in Figs. 1, 2 and 5, a body 3 which is pre-produced integrally with a ring (rim) 5 and spokes 7. Note that EY in Figs. 1, 3 and 4 indicates an eye (a view point) of a vehicle driver.

The body 3 includes a ring core 9, spoke cores 11 and a form layer 13 of soft synthetic resin. The ring core 9 and spoke cores 11 are made of metal (for example, aluminum die-cast). Each of the spoke cores 11 extends inward from an inner circumference of the ring core 9 and is formed integrally with the ring core 9.

The foam layer 13 is made of foamed polyurethane, for example to cover at least the ring core 9 among the ring core 9 and the spoke cores 11. And, the ring core 9 and the foam layer 13 covering the ring core 9 constitute the ring 5, and the spoke cores 11 and the foam layer 13 covering the spoke cores 11 constitute the spokes 7. The ring 5 of the body 3 is made ring-shaped (torus-shaped). Note that the body 3 is made by integrally molding the foam layer 13 around the cores 9 and 11.

A driver-side leather(s) 15 (see Fig. 6(a)) and a anti-driver-side leather(s) 17 (see Fig. 6(b)) are attached onto the steering wheel 1. The driver-side leather 15, for example, is a ring-shaped single sheet to cover a driver-side portion of the body 3 seamlessly and continuously. Also, the anti-driver-side leather 17, for example, is a ring-shaped single sheet to cover a anti-driver-side portion of the body 3 seamlessly and continuously. Note that each of the leathers 15 and 17 is made of a natural leather, but may be made of an artificial leather.

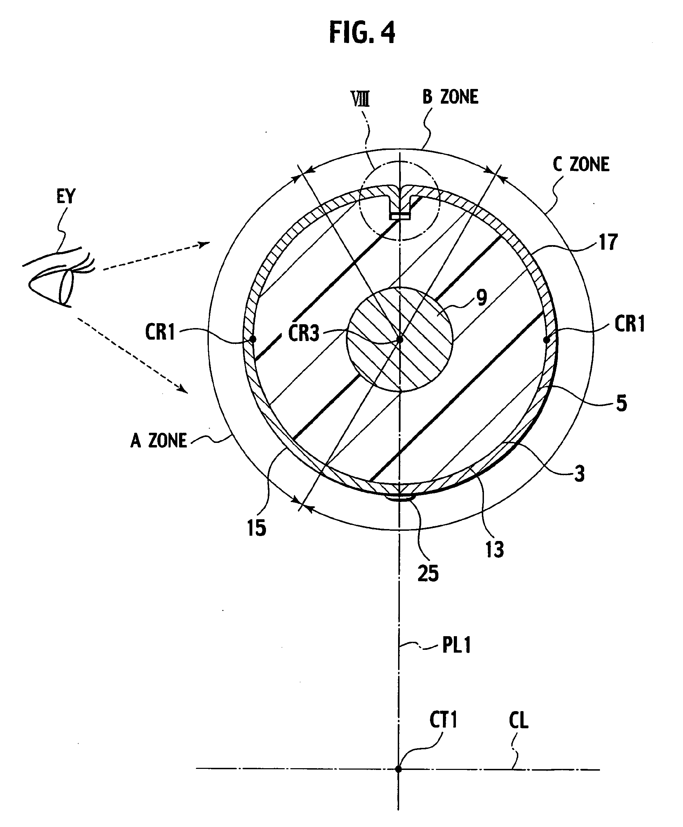

A portion covered by the driver-side leather 15 (the driver-side portion of the body 3) is composed of (i) a driver-side portion of the ring 5 among two portions divided by a plane PL1 passing through a center CT1 of the ring 5 (see Fig. 4 or 5) and a cross-sectional center CR3 (see Fig. 4) and (ii) driver-side portions of the spokes 7 covered by the foam layer 13. (The plane CL1 is almost perpendicular to a central rotational axis CL of the steering wheel 1 installed on the vehicle and divides a volume of the ring 5 into almost equal amount.)

The driver-side leather 15 before covering the driver-side portion of the body 3 has a shape in which tabs 19 for covering the drive-side portion of the spokes 7 are extended from an inner circumference of a part made by excluding a small-radius concentric circle from a large circle, as shown in Fig. 6(a).

The driver-side leather 15 is hardly expanded or shrunk at the width center of the ring 5 with the steering wheel 1 installed on the vehicle and viewed from a direction along the central rotational axis CL of the steering wheel 1 (at left CR1 in Fig. 4 and CR1 in Fig. 5). An expanded or shrunk amount of the driver-side leather 15 accordingly increases from CR1 to an outer or inner circumference of the ring 5, and the driver-side leather 15 covers the ring 5 almost without corrugations.

Otherwise, a portion covered by the anti-driver-side leather 17 (the anti-driver-side portion of the body 3) is composed of (i) an anti-driver-side portion of the ring 5 among two portions divided by the plane PL1 passing through a center CT1 of the ring 5 (see Fig. 4 or 5) and a cross-sectional center CR3 (see Fig. 4) and (ii) anti-driver-side portions of the spokes 7 covered by the foam layer 13. (The plane CL1 is almost perpendicular to the central rotational axis CL of the steering wheel 1 installed on the vehicle and divides the volume of the ring 5 into almost equal amount.)

The anti-driver-side leather 17 has a similar shape to the driver-side leather 15 excluding tabs 21 for covering the spokes 7. The anti-driver-side leather 17 is hardly expanded or shrunk at right CR1 in Fig. 4 and accordingly expanded or shrunk to the outer or inner circumference of the ring 5 to cover the ring 5. Almost entire surfaces of portions, at which the foam layer 13 of the body 3 exists, are covered by the driver-side leather 15 and the anti-driver-side leather 17.

Edges of the driver-side leather 15 and the anti-driver-side leather 17 are finished by the kimekomi at an outer seam line between the driver-side leather 15 and the anti-driver-side leather 17 on the outer circumference of the ring 5 (VIII in Fig. 4). Otherwise, edges of the driver-side leather 15 and the anti-driver-side leather 17 are finished by the hand-sewing (including mechanically sewing as described above) at an inner seam line between the driver-side leather 15 and the anti-driver-side leather 17 on the inner circumference of the ring 5.

There is no stitch along seam lines between the driver-side leather 15 and the anti-driver-side leather 17 on the spokes 7. For example, the tabs 19 of the driver-side leather 15 are made wider than the tabs 21 of the anti-driver-side- leather 17 as shown in Fig. 6(a). Then, each of the tabs 19 is partially covers each of the tabs 21 on each of the spokes 7, respectively, when the leathers 15 and 17 are attached onto the body 3.

Note that a pad 23 (see Figs. 1 to 3) for installing horn switches and an airbag is provided on a center of the steering wheel 1. The pad 23 hides inner ends of the spokes 7 (portions not covered by the foam layer 13) from the driver's sight.

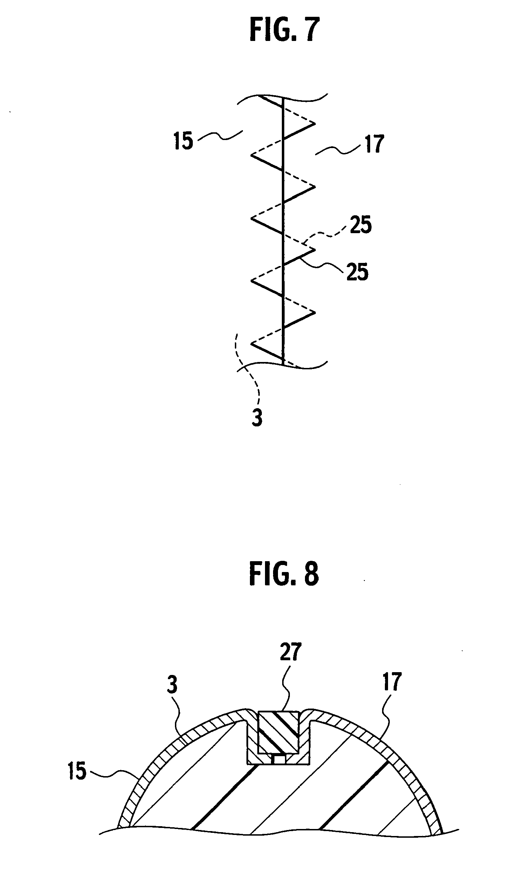

Here, the kimekomi and the hand-sewing are described. The kimekomi is a finishing process, as shown at VIII in Fig. 4, in which the edges of the driver-side leather 15 and the anti-driver-side leather 17 are tucked into a groove with a predefined depth, which is provided along the outer circumference of the ring 5 of the body 3 and has prescribed width and depth. The hand-sewing is a finishing process, as shown in Fig. 7, in which the edges of the driver-side leather 15 and the anti-driver-side leather 17 are sewn by a string (s) 25.

And now the surface of the steering wheel 1 may be segmented into A to C zones as shown in Fig. 4. Note that Fig. 4 shows a cross-sectional drawing and the zones are indicated circularly in Fig. 4. However, the zones are ring-shaped around the central rotational axis CL practically.

The A-zone is an area which is always visible to the driver when the driver drives the vehicle. The B-zone is an area which can be seen by the driver according to a rotational angle (steering angle) of the steering wheel 1. The C-zone is an area which is not visible to the driver when the driver drives the vehicle.

In the steering wheel 1, the kimekomi (VIII in Fig. 4) is located in the B-zone and the hand-sewing is located in the C-zone. Therefore, no seam of leathers or no stitch exists within the A-zone.

Note that, instead of the kimekomi, folding-and-gluing (Fig. 9), welting (Fig. 8) or grooving (Fig. 10) may be applied to a finishing process of the edges of the driver-side leather 15 and the anti-driver-side leather 17 along the outer circumference of the steering wheel 1.

In case where the welting is applied, as shown in Fig. 8, the edges of the driver-side leather 15 and the anti-driver-side leather 17 are inserted into a slightly wide groove with a predefined depth, which is provided along the outer circumference of the ring 5 of the body 3 and has prescribed width and depth. And then the inserted leathers are riveted by a ring-like welt 27 to plug the groove.

The folding-and-gluing is a finishing process, as shown in Fig. 9, in which each prescribed width of the edges of the driver-side leather 15 and the anti-driver-side leather 17 are folded back completely and glued. And then the leathers 15 and 17 are glued onto the body 3 with the edges contacted each other.

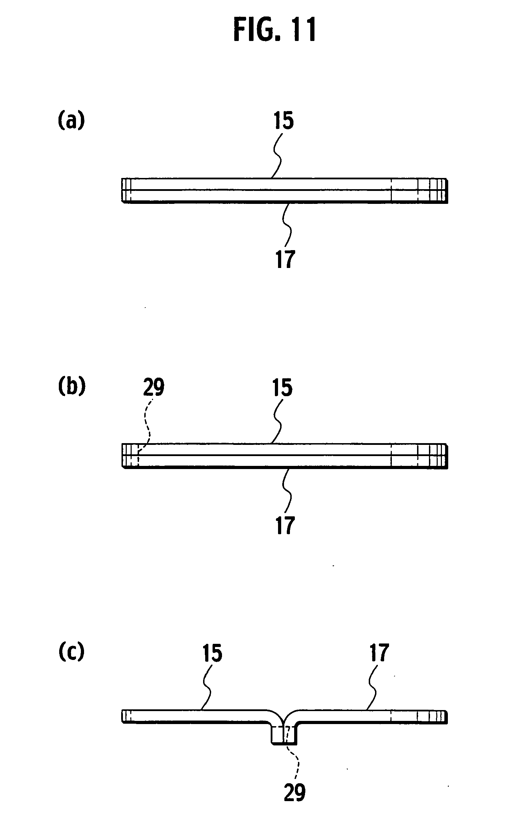

The grooving is a finishing process in which the edges of the driver-side leather 15 and the anti-driver-side leather 17 are overlapped each other as shown in Fig. 11 (a) and the edges of the leathers are sewn by a string (s) 29 under being overlapped as shown in Fig. 11 (b). Then the leathers 15 and 17 are opened as shown in Fig. 11 (c) and the edges with the string 29 are inserted into a groove which is provided along the outer circumference of the ring 5 of the body 3 and has prescribed width and depth as shown in Fig. 10.

Note that the edges of the leathers 15 and 17 at the inner circumference of the steering wheel 1 may be treated by the folding-and-gluing (Fig. 9) or the welting (Fig. 8) instead of the hand-sewing. In this case, V-stitch or parallel-stitch may be treated along the edges of the leathers 15 and 17 at the inner circumference of the steering wheel 1.

With the V-stitch, as shown in Fig. 15, each of an edge 15a of the driver-side leather 15 and an edge 17a of the anti-driver-side leather 17, along which slating stitch patterns are sewn by a string(s) 30, are contacted each other. In this case, the V-stitch may be merely ornamental stitches and the edges 15a and 17a may be fixed by other than the hand-sewing. Since almost V-shaped stitches are provided along the inner circumference of the steering wheel 1 by this finishing process, an aesthetic appearance can be produced in the steering wheel 1. In addition, since fingers can be stuck on the string(s) 30 when the steering wheel is held, slipping can be prevented.

With the parallel-stitch, as shown in Fig. 16, each of an edge 15a of the driver-side leather 15 and an edge 17a of the anti-driver-side leather 17, along which parallel stitch patterns are sewn by a string(s) 30, are contacted each other. In this case, the parallel-stitch may be merely ornamental stitches and the edges 15a and 17a may be fixed by other than the hand-sewing. Since almost dashed stitches are provided along the inner circumference of the steering wheel 1 by this finishing process, an aesthetic appearance can be produced in the steering wheel 1. In addition, since fingers can be stuck on the string(s) 30 when the steering wheel is held, slipping can be prevented.

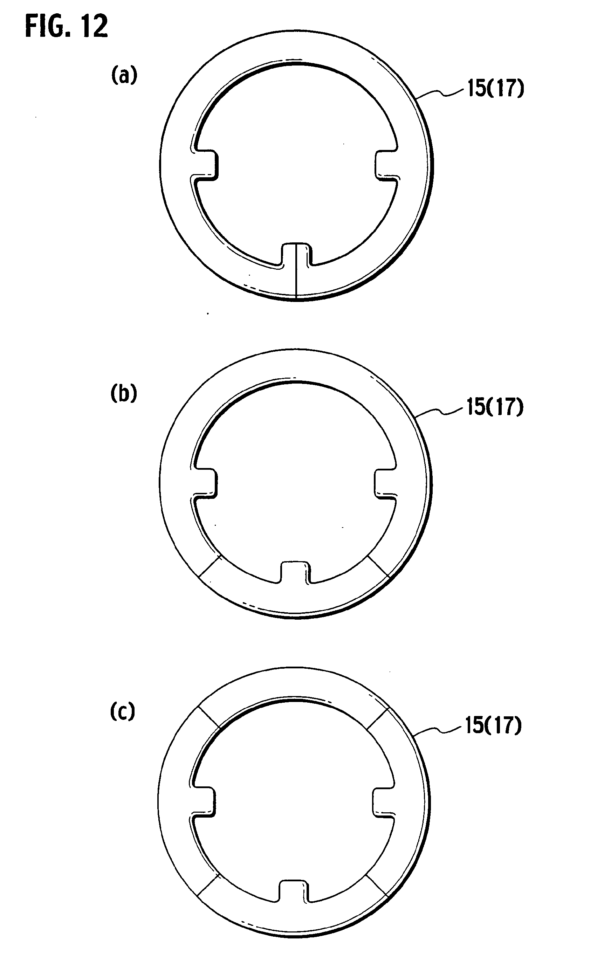

In the above-described steering wheel 1, each of the driver-side leather 15 and the anti-driver-side leather 17 is formed as a ring-shaped seamlessly. However, each of the driver-side leather 15 and the anti-driver-side leather 17 may be formed by a single sheets (see Fig. 12 (a)) or by plural sheets (see Figs. 12 (b) and 12 (c) to form a seam line (s) at a prescribed position(s) along the circumferential direction. Note that a finishing process of the edges such as the sewing-and-folding or the grooving may be treated along the seam line(s). The sewing-and-folding is a method where the leathers 15 and 17 are attached onto the ring 5 of the body 3 as shown in Fig 14 after the treatment shown in Figs 11(a) to 11(c) has been done and the leathers 15 and 17 have been opened.

It is preferable that the number of seam lines on the anti-driver-side leather 17 is more than that on the driver-side leather 15 if seam lines are provided on a circumference of the driver-side leather 15 or the anti-driver-side leather 17. For example, it can be presumable that the driver-side leather 15 is formed by a single sheet seamlessly and two seam lines are provided on the anti-driver-side leather 17 as shown in Fig. 12 (b).

In the steering wheel 1 according to the above-described embodiment, since it is produced by covering the body 3, which has been pre-produced integrally, by the leathers 15 and 17, it can be produced easily with less man-hours than the case where a foam layer with leathers already attached is glued onto a core (case of the Patent Document 1). In addition, since pressure applied between the core and the foam layer is needed at gluing in the case where the foam layer is glued onto the core, there is fear that the leathers are damaged if an entire surface of the ring is covered by the leathers. However, according to the steering wheel 1 according to the above-described embodiment, since there is no process where a foam layer with leathers already attached is glued onto a core, there is no fear that the leathers 15 and 17 are damaged at the production.

Furthermore, the outer circumferential edges of the leathers 15 and 17 are treated by the kimekomi or the like and the inner circumferential edges thereof are treated by the hand-sewing or the like. The edges of the leathers 15 and 17 is firstly fixed on to the outer circumferential of the body when the leathers 15 and 17 are attached onto the body 3 without corrugations under being expanded or shrunk accordingly, and then the edges are treated by the hand-sewing or the like along the inner circumferential of the body after this fixing. The process of attaching the leathers 15 and 17 onto the body can be simplified and the steering wheel 1 can be produced easily.

Furthermore, the leathers 15 and 17 are expanded or shrunk accordingly along both of the inner and outer circumference when the leathers 15 and 17 is attached onto the body, unlike the conventional steering wheel in which the leather(s) is expanded or shrunk only along the inner circumferential. Therefore, since the maximum expanded or shrunk amount of the leathers 15 and 17 is reduced, a high-quality feeling can be produced by preventing grains and dimples of the leathers 15 and 17 to be eliminated at attaching the leathers 15 and 17 onto the body 3.

Note that a further high-quality feeling can be produced with no seam lines visible from the driver's sight with normal driving position if the driver-side leather 15 is made of a ring-shaped single leather sheet.

In addition, according to the steering wheel 1, the edges of the leathers 15 and 17 are treated by the kimekomi or the like (not by the hand-sewing) along the outer circumference of the steering wheel 1. Therefore, since a string(s) for sewing the leathers 15 and 17 is not exposed on the surface of the leathers 15 and 17, a better durability can be provided by preventing the string to be worn with long-term use. Furthermore, since the string doesn't contact with the palms of the driver's hands when the steering wheel 1 is operated, a better tactile impression and a better operational feeling can be provided. Note that although a string(s) 25 or 30 may be exposed when the edges of the leathers 15 and 17 are treated by the hand-sewing along the inner circumference of the steering wheel 1, the exposed string 25 is hardly contacts with the palms of the driver's hands at the usual driving. Since it may contact with finger tips even if it contacts, an operational feeling is not reduced.

Furthermore, it is hard to attach a foam layer onto a core similarly as the conventional steering wheel in case where a cross-sectional shape of the core of a ring is not circular. On the contrary, in the steering wheel 1 according to the above-described embodiment, since the body 3 is pre-produced integrally, a cross-sectional shape of the ring 5 can be non-circular (for example, H-shape or U-shape) with ease. Therefore, weight saving can be achieved by reducing the weight of the core without degrading the durability of the steering wheel 1.

Furthermore, since less seam lines are seen from the driver's sight if the number of seam lines on the anti-driver-side leather 17 is made more than that on the driver-side leather 15, a high-quality feeling can be produced and the anti-driver-side leather can be taken from the leather which has been already cut-out with less waste.

Furthermore, in the steering Wheel 1 according to the above described embodiment, since there is no stitch on the spokes 7, no string contacts with the driver's fingers even if the driver's fingers contact with the spokes. Therefore, a better operational feeling can be provided.

### INDUSTRIAL APPLICABILITY

According to the present invention, a steering wheel capable of being produced more easily, achieving less production man-hours and produce than ever before and providing a high-quality feeling by preventing grains and dimples on a leather(s) to be eliminated, can be provided.

## Claims

1. A steering wheel comprising:
a body pre-produced integrally with a ring and spokes;
a driver-side leather for covering a driver-side of the body; and
an anti-driver-side leather for covering a anti-driver-side of the body, wherein
edges of the driver-side leather and the anti-driver-side leather are treated by at least one of (a) tucking, (b) folding-and-gluing, (c) welting and (d) grooving, along a seam line between the edges at an outer circumference of the ring, and
edges of the driver-side leather and the anti-driver-side leather are treated by at least one of (e) sewing, (f) folding-and-gluing and (g) welting, along a seam line between the edges at an inner circumference of the ring.

2. The steering wheel according to claim 1, wherein
stitch patterns are provided along the edges of the driver-side leather and the anti-driver-side leather at the inner circumference of the ring.

3. The steering wheel according to claim 2, wherein
the number of seam lines on the anti-driver-side leather is more than the number of seam lines on the driver-side leather.
